(19) **Europäisches Patentamt**
**European Patent Office**
**Office européen des brevets**

(11) **EP 4 144 513 B1**

(12) **EUROPÄISCHE PATENTSCHRIFT**

(45) Veröffentlichungstag und Bekanntmachung des Hinweises auf die Patenterteilung:
**04.06.2025 Patentblatt 2025/23**

(21) Anmeldenummer: **21194746.0**

(22) Anmeldetag: **03.09.2021**

(51) Internationale Patentklassifikation (IPC):
*B29D 30/38* (2006.01)    *B60C 1/00* (2006.01)
*D06M 15/564* (2006.01)    *D06M 15/693* (2006.01)
*C08J 5/12* (2006.01)    *C09J 5/00* (2006.01)
*C08J 5/06* (2006.01)    *C09J 163/00* (2006.01)
*C08L 63/00* (2006.01)    *C08G 18/69* (2006.01)
*C08L 75/00* (2006.01)    *C08G 18/73* (2006.01)
*C08G 18/80* (2006.01)    *C08L 75/04* (2006.01)
*C08L 91/06* (2006.01)

(52) Gemeinsame Patentklassifikation (CPC):
**B29D 30/38; B60C 1/0041; C08G 18/69;**
**C08G 18/73; C08G 18/80; C08G 18/8061;**
**C08J 5/12; C08L 63/00; C08L 75/04; C09J 5/00;**
**C09J 163/00; D06M 15/693;** C09J 2203/354;
C09J 2400/263; C09J 2407/00;      (Forts.)

(54) **VERBUNDMATERIAL ALS SCHEUERSCHUTZ FÜR FAHRZEUGREIFEN UND VERFAHREN ZUR HERSTELLUNG**

COMPOSITE MATERIAL AS APRON FOR VEHICLE TYRES AND METHOD OF MANUFACTURING THE SAME

MATIÈRE COMPOSITE COMME MOYEN DE PROTECTION POUR PNEUS DE VÉHICULE ET PROCÉDÉ DE FABRICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**08.03.2023 Patentblatt 2023/10**

(73) Patentinhaber: **Continental Reifen Deutschland GmbH**
**30175 Hannover (DE)**

(72) Erfinder:
• **Schmaunz-Hirsch, Cornelia**
**30165 Hannover (DE)**
• **Naumann, Wolfgang**
**30165 Hannover (DE)**
• **Jahr, Michael**
**30165 Hannover (DE)**
• **Kramer, Thomas**
**30165 Hannover (DE)**
• **Kahner, Rainer**
**30165 Hannover (DE)**

(74) Vertreter: **Continental Corporation**
**c/o Continental AG**
**Intellectual Property**
**Postfach 169**
**30001 Hannover (DE)**

(56) Entgegenhaltungen:
**EP-A1- 3 702 522**     **WO-A1-2019/015792**
**JP-A- S60 139 876**

• **DATABASE CHEMABS [online] CHEMICAL ABSTRACTS SERVICE, COLUMBUS, OHIO, US; TIZUKA JOJI ET AL: "COLORING AND BONDING OF FIBER MATERIALS FOR RUBBER REINFORCEMENT", XP002149189, retrieved from CHEMABS Database accession no. 104-20584**

(52) Gemeinsame Patentklassifikation (CPC): (Forts.)
C09J 2421/006; D06M 15/564

**Beschreibung**

Die Erfindung betrifft ein Verfahren zur Herstellung eines vulkanisierbaren Verbundmaterials und ein darauf aufbauendes Verfahren zur Herstellung eines vulkanisierten Verbundmaterials bzw. eines Fahrzeugreifens, sowie ein entsprechendes vulkanisierbares Verbundmaterial und ein daraus herstellbares vulkanisiertes Verbundmaterial bzw. einen entsprechenden Fahrzeugreifen.

Der Gegenstand der Erfindung ist in den beigefügten Ansprüchen definiert.

Es ist bekannt, dass Fahrzeugreifen, wie beispielsweise Fahrradreifen, in verschiedenen Bauteilen textile Festigkeitsträger zur Verstärkung aufweisen. Auch andere technische Gummiartikel, wie Gurte, Riemen und Schläuche weisen in vielen Fällen Festigkeitsträger auf. Hierbei sind die Festigkeitsträger üblicherweise von mindestens einer Kautschukmischung umgeben, die auch als Gummierungsmischung bzw. im vulkanisierten Zustand als Gummierung bezeichnet wird.

Eine Anwendung für entsprechende Verbundmaterialien, die insbesondere für bestimmte Fahrradreifen, beispielsweise Mountainbikereifen, von Bedeutung ist, ist die als Scheuerschutz, d.h. als schützende Materiallage im Seitenwandbereich der Fahrzeugreifen oder als Felgenschutz im Bereich der sogenannten Nessel. Bei entsprechenden als Scheuerschutz eingesetzten Verbundmaterialien liegen die textilen Festigkeitsträger, welche teilweise in der Form von Geweben eingesetzt werden, zumeist an der Oberfläche der Verbundmaterialien und sind lediglich teilweise von der Gummierung umgeben, so dass die textilen Festigkeitsträger an der Oberfläche offenliegen und die unterliegenden Gummiwerkstoffe quasi als Schutzschicht bedecken.

Im Stand der Technik werden die textilen Festigkeitsträger bei der Herstellung entsprechender Verbundmaterialien zumeist auf der Oberfläche einer vernetzbaren Gummierungsmischung angeordnet. Bei der späteren Vulkanisation wird die Gummierungsmischung dann zumeist nach außen gegen die textilen Festigkeitsträger in die Vulkanisationsform gedrückt, so dass diese im erhaltenen vulkanisierten Verbundmaterial teilweise in der Gummierung liegen.

Eine Problematik besteht regelmäßig darin, dass die Festigkeitsträger und die umgebende Gummierung im Regelfall unterschiedliche mechanische Eigenschaften, insbesondere unterschiedliche Festigkeiten, aufweisen. Vor allem bei andauernder mechanischer und dynamischer Beanspruchung, wie sie im Fahrbetrieb des Fahrzeugreifens auftritt, ist daher eine ausreichende Haftung zwischen den Festigkeitsträgern und der umgebenden Gummierung notwendig, um trotzdem eine hinreichende Verbundfestigkeit gewährleisten zu können.

Im Stand der Technik ist bekannt, die Festigkeitsträger vor der Gummierung für eine ausreichende Haftung zu aktivieren (sogenannte Haftungsaktivierung oder Haftaktivierung), wobei üblicherweise sogenannte RFL-Dips (kurz für Resorcin-Formaldehyd-Latex) verwendet werden, welche beispielsweise mit einem Rakel appliziert werden können.

Bei dieser Form der Haftungsaktivierung wird jedoch regelmäßig als nachteilig empfunden, dass die aus dem Stand der Technik bekannten RFL-Dips über eine starke Eigenfärbung verfügen, wobei die zumeist rotbräunliche Färbung auch die Möglichkeiten zur späteren Einfärbung mit Farbmitteln limitiert. Gerade bei der Verwendung für einen Scheuerschutz wiegt dieser Nachteil besonders schwer, da die textilen Festigkeitsträger auf der Oberfläche ja bestimmungsgemäß zumindest teilweise sichtbar sind. Zudem überdeckt diese Haftaktivierung regelmäßig die Färbung der textilen Festigkeitsträger, obwohl diese für den Fachmann sehr aufschlussreich sein könnte, insbesondere zur Identifikation der eingesetzten Materialien anhand deren Färbung oder zum Erkennen etwaiger herstellerspezifischer Markierungen, wie beispielsweise von Kennfäden. Um diesen Nachteil auszugleichen und eine für den Endkunden akzeptable Gestaltung zu erreichen, sind im Stand der Technik daher häufig aufwendigere Herstellungsverfahren nötig, bei denen die textilen Festigkeitsträger lediglich auf der für die Verbindung mit der Gummierung vorgesehenen Seite beschichtet werden.

Bei den aus dem Stand der Technik bekannten Verbundmaterialien für den Scheuerschutz wird zuweilen als nachteilig empfunden, dass die die textilen Festigkeitsträger teilweise umgebende Gummierung es erheblich erschweren kann, die ordnungsgemäße Positionierung der textilen Festigkeitsträger zu überprüfen und deren Zustand bei der Verwendung im Fahrbetrieb zuverlässig zu bestimmen. Insbesondere letzteres wird dabei häufig als nachteilig empfunden, weil die textilen Festigkeitsträger des Scheuerschutzes bestimmungsgemäß starken Belastungen ausgesetzt sind und dadurch für Verschleiß anfällig sind.

JPS 60139876 A betrifft ein Verfahren zum Färben und Haftverbessern von Verstärkungsmaterialien für transluzente bzw. transparente Kautschukmischungen zur Anwendung in Reifen.

Es war die primäre Aufgabe der vorliegenden Erfindung, die vorstehend beschriebenen Nachteile des Standes der Technik auszuräumen oder zumindest zu verringern.

Es war somit eine Aufgabe der vorliegenden Erfindung, ein Verfahren zur Herstellung von vulkanisierbaren Verbundmaterials anzugeben, aus denen mittels Vulkanisation leistungsfähige vulkanisierte Verbundmaterialien erhalten werden können, die besonders für den Einsatz als Scheuerschutz in Fahrzeugreifen geeignet sind. Das anzugebende Verfahren sollte dabei besonders zeit- und kosteneffizient sowie vorzugsweise ohne aufwendige Arbeitsschritte, wie beispielsweise eine einseitige Haftaktivierung, durchführbar sein.

Es war eine Aufgabe der vorliegenden Erfindung, dass die vulkanisierten Verbundmaterialien eine möglichst leichte, zuverlässige und zerstörungsfreie Identifikation und Qualitätsprüfung der in den vulkanisierten Verbundmaterialien enthaltenen textilen Festigkeitsträger ermöglichen sollten, wobei insbesondere auch eine klare Unterscheidbarkeit von benachbarten textilen Festigkeitsträgern möglich sein sollte, so dass insbesondere auch eine Bewertung des Abnutzungszustandes der textilen Festigkeitsträger in solchen Bereichen möglich sein sollte, die von der Gummierung bedeckt sind.

Es war eine ergänzende Aufgabe der vorliegenden Erfindung, dass die vulkanisierten Verbundmaterialien eine gegenüber dem Stand der Technik erhöhte Flexibilität hinsichtlich der Farbgestaltung aufweisen sollten. Hierbei war es insbesondere wünschenswert, dass die Grundfarbe der textilen Festigkeitsträger trotz etwaiger haftaktivierender Beschichtungen sichtbar bleiben sollte, insbesondere um eine farbliche Materialidentifikation zu ermöglichen und herstellerspezifische Kennfäden sichtbar zu machen.

Es war eine zusätzliche Aufgabe der vorliegenden Erfindung, dass die vulkanisierten Verbundmaterialien eine ausreichend hohe Verbundfestigkeit zeigen sollten, insbesondere zwischen den textilen Festigkeitsträgern und der Gummierung. Es war eine weitere Aufgabe der vorliegenden Erfindung, dass die positiven Farbeigenschaften, anders als beispielsweise bei RFL-Dips, weitgehend unabhängig von den bei der Vulkanisation verwendeten Bedingungen einstellbar sein sollten.

Für den Fachmann ist ersichtlich, dass es eine ergänzende Aufgabe der vorliegenden Erfindung war, zudem ein Verfahren zur Herstellung eines Fahrzeugreifens, und einen entsprechenden Fahrzeugreifen anzugeben. Dabei war es eine ergänzende Aufgabe der vorliegenden Erfindung, dass die entsprechenden Fahrzeugreifen idealerweise einen Beitrag zur Fahrsicherheit leisten sollten.

Die Erfinder der vorliegenden Erfindung haben nunmehr erkannt, dass zumindest einige der vorstehend angegebenen Aufgaben gelöst werden können, wenn eine Gummierung verwendet wird, die für sichtbares Licht zumindest teilweise durchlässig ist, so dass auch die von der Gummierung bedeckten Teile der textilen Festigkeitsträger von außen sichtbar sind und beispielsweise hinsichtlich etwaiger Verschleißerscheinungen bewertet werden können.

Als nachteilig bei diesem Vorgehen hat es sich jedoch erwiesen, dass die unvorteilhaften Farbeigenschaften der RFL-Dips hierbei besonders stark zum Tragen kommen, wobei insbesondere auch eine lediglich teilweise Haftaktivierung in dieser prinzipiell vorteilhaften Ausgestaltung nicht verhindern kann, dass die unvorteilhafte Färbung des RFL-Dips sichtbar ist.

Die Erfinder der vorliegenden Erfindung haben nunmehr erkannt, dass die vorstehend definierten Aufgaben dann gelöst werden können, wenn eine spezifische Form der Haftaktivierung verwendet wird, wie es in den Ansprüchen definiert ist.

Die vorstehend genannten Aufgaben werden somit durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter vulkanisierbarer Verbundmaterialien, vulkanisierter Verbundmaterialien, und Fahrzeugreifen ergeben sich aus den Merkmalen bevorzugter Verfahren.

Die Erfindung betrifft ein Verfahren zur Herstellung eines vulkanisierbaren Verbundmaterials nach Anspruch 1, umfassend die Schritte:

a) Herstellen oder Bereitstellen eines textilen Festigkeitsträgers,
b) Behandeln des textilen Festigkeitsträgers mit einer wässrigen Dispersion zur Haftaktivierung des textilen Festigkeitsträgers und zum Erhalt eines haftaktivierten textilen Festigkeitsträgers, und
c) Anordnen des haftaktivierten textilen Festigkeitsträgers auf der Oberfläche eines Grundmaterials umfassend eine vernetzbare Gummierungsmischung zum Erhalt des vulkanisierbaren Verbundmaterials,

wobei die wässrige Dispersion im Wesentlichen frei ist von freiem Resorcin sowie Resorcin-Vorkondensaten, insbesondere Resorcin-Formaldehyd-Vorkondensaten, und frei ist von freiem Formaldehyd sowie Formaldehyd freisetzenden Substanzen,
wobei die vernetzbare Gummierungsmischung durch Vulkanisation zu einer vernetzten Gummierungsmischung verarbeitet werden kann, die zumindest abschnittsweise für sichtbares Licht zumindest teilweise durchlässig ist.

Mit dem erfindungsgemäßen Verfahren werden vulkanisierbare Verbundmaterialien erhalten, aus denen mittels Vulkanisation leistungsfähige vulkanisierte Verbundmaterialien mit einer exzellenten Verbundfestigkeit erhalten werden können, die sich ausgezeichnet als Scheuerschutz für Fahrzeugreifen eignen. In den vulkanisierten Verbundmaterialien ist es durch die spezifisch gewählte Haftaktivierung vorteilhafterweise möglich, auch die von der Gummierung bedeckten Teile der textilen Festigkeitsträger von außen zu inspizieren, so dass eine zuverlässige und zerstörungsfreie Qualitätsprüfung möglich ist, die insbesondere auch von Laien vorgenommen werden kann.

In synergistischer Weise wird durch die gewählte Haftaktivierung überraschenderweise keine ungewollte Färbung verursacht, da diese vorteilhafterweise farblos bzw. transparent ausgebildet werden kann. Hierdurch ist es möglich, die ursprüngliche Färbung der textilen Festigkeitsträger zu erkennen, wodurch beispielsweise Informationen über die in den textilen Festigkeitsträgern verwendeten Materialien und/oder Herstellerangaben, bspw. durch Kennfäden, sichtbar bleiben. Hierdurch ist es zudem möglich, die Flexibilität hinsichtlich der Farbgestaltung signifikant zu erhöhen, da vorteilhafterweise nicht nur die Gummierung eingefärbt werden kann, sondern eine Färbung der textilen Festigkeitsträger ebenso möglich wird, wie eine Färbung der haftaktivierenden Beschichtung. Es kann dabei als Vorteil der Erfindung gesehen werden, dass die positiven Farbeigenschaften weitgehend unabhängig von den bei der Vulkanisation verwendeten Temperaturen erhalten werden können.

Durch die vorstehend beschriebenen Vorteile wird auch die Herstellung eines entsprechenden Scheuerschutzes effizienter möglich, da es bei dieser Verfahrensführung nicht nötig ist, die Haftaktivierung lediglich selektiv auf einer Seite der textilen Festigkeitsträger durchzuführen.

Abschließend kann es als Vorteil des erfindungsgemäßen Verfahrens gesehen werden, dass sich in den vulkanisierten Verbundmaterialien, bedingt durch die Art der Haftaktivierung, für die textilen Festigkeitsträger ein leichter Glanz ergibt, der je nach der gewählten Einfärbung in Richtung eines metallischen Glanzes gehen kann. Durch den Einsatz eines entsprechenden Verbundmaterials an Stelle eines herkömmlichen Scheuerschutzes mit einem weitgehend absorbierenden, schwarzen Gummiwerkstoff wird durch diesen Glanz die Sichtbarkeit des Reifens gerade bei schwierigen Sichtbedingungen erhöht, da bspw. ein höherer Anteil an einfallendem Scheinwerferlicht reflektiert werden kann.

Die Definition der vernetzbaren Gummierungsmischung über die Eigenschaften der durch Vulkanisation daraus herstellbaren Gummierung, d.h. der vernetzten Gummierungsmischung ist in Übereinstimmung mit dem in der Branche üblichen Vorgehen und dem fachmännischen Verständnis, da eine entsprechende Definition bei entsprechenden polymeren Materialien, deren Struktur nicht genau beschrieben werden kann, regelmäßig die einzige praktikable Möglichkeit darstellt, das entsprechende Material zu definieren. Ein aus dem vulkanisierbaren Verbundmaterial herstellbares vulkanisiertes Verbundmaterial umfasst entsprechend eine vernetze Gummierungsmischung, die zumindest abschnittsweise für sichtbares Licht zumindest teilweise durchlässig ist.

Im Rahmen der vorliegenden Erfindung bedeutet der Ausdruck "für sichtbares Licht zumindest teilweise durchlässig", in Übereinstimmung mit dem fachmännischen Verständnis, dass die vernetzte Gummierungsmischung so wenig Wechselwirkung mit elektromagnetischer Strahlung einer Wellenlänge im sichtbaren Bereich, bzw. einem Teil der Wellenlängen im sichtbaren Bereich, zeigt, dass die textilen Festigkeitsträger im vulkanisierbaren Verbundmaterial und im vulkanisierten Verbundmaterial von außen sichtbar sind. Dies bedeutet, dass es nicht nötig ist, dass die vernetzte Gummierungsmischung überhaupt keine Absorption im sichtbaren Wellenlängenbereich zeigt, da insbesondere bei transparent farbigen Gummierungen, auch eine teilweise Absorption, bspw. bei bestimmten Wellenlängen, toleriert werden kann.

Gemäß der vorstehenden Definition ist die vernetzte Gummierungsmischung zumindest abschnittsweise für sichtbares Licht zumindest teilweise durchlässig. Dies bedeutet, dass das vulkanisierbare Verbundmaterial bzw. das vulkanisierte Verbundmaterial auch Abschnitte umfassen kann, in denen die Gummierung nicht lichtdurchlässig ausgebildet ist, beispielsweise in der Form von alternierenden Bereichen unter den textilen Festigkeitsträgern.

Der Begriff "im Wesentlichen frei von" ist in Übereinstimmung mit dem fachmännischen Verständnis im Rahmen der vorliegenden Erfindung so zu verstehen, dass die entsprechenden Substanzen nur in Mengen enthalten sein dürfen, die die wesentlichen Eigenschaften der beanspruchten Zusammensetzung nicht wesentlich beeinflussen. Beispielsweise darf die Menge dieser Stoffe nicht über Spurenmengen hinausgehen, die aus einer Kontamination resultieren. Typischerweise sollen in der erfindungsgemäß einzusetzenden wässrigen Dispersion jeweils nicht mehr als 0,1 Gew.-% (Trockengewicht der wässrigen Dispersion), bezogen auf das Gesamtgewicht der wässrigen Dispersion, von den angegebenen Komponenten, wie etwa Resorcin, Resorcin-Vorkondensaten, Formaldehyd und Formaldehyd freisetzenden Substanzen enthalten sein, d.h. 0,1 % nach Gewicht ist die maximale Menge für jede der obigen Komponenten. Vorzugsweise beträgt der Gehalt sämtlicher dieser Komponenten in der wässrigen Dispersion 0 Gew.-%.

Die im Rahmen der vorliegenden Erfindung verwendete Angabe phr (parts per hundred parts of rubber by weight) ist die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen, die sich entsprechend zu 100 addiert.

Grundsätzlich bevorzugt ist ein erfindungsgemäßes Verfahren, wobei das Anordnen des haftaktivierten textilen Festigkeitsträgers auf der Oberfläche des Grundmaterials so erfolgt, dass der haftaktivierte textile Festigkeitsträger teilweise von der vernetzbaren Gummierungsmischung umgeben ist.

Gerade für Anwendungen mit hoher erwarteter Belastung bevorzugt ist ein erfindungsgemäßes Verfahren, wobei der an der Oberfläche des Grundmaterials angeordnete textile Festigkeitsträger und/oder die Oberfläche des Grundmaterials mit einem Beschichtungsmaterial beschichtet werden, wobei das Beschichtungsmaterial einen oder mehrere Füllstoffe umfasst, die ausgewählt sind aus der Gruppe bestehend aus keramischen Hartstoffen, Gläsern und glasartigen Materialien, bevorzugt keramischen Hartstoffen, wobei der Massenanteil an Füllstoffen im Beschichtungsmaterial bevorzugt 5 bis 10 % beträgt, bezogen auf die Masse des Beschichtungsmaterials, wobei das Beschichtungsmaterial bevorzugt Bindemittel auf der Basis zumindest eines vulkanisierbaren Polymers, besonders bevorzugt Polyisopren, Polybutadien, Styrolbutadien-Kautschuk oder Naturkautschuk, ganz besonders bevorzugt ein Bindemittel auf der Basis von Polyurethan, umfasst.

Das erfindungsgemäße Verfahren ist vorteilhafter Weise für alle dem Fachmann bekannten textilen Festigkeitsträger geeignet. Jedoch konnten die Erfinder der vorliegenden Erfindung Merkmale des textilen Festigkeitsträger identifizieren, die für das erfindungsgemäße Verfahren besonders geeignet sind.

Bevorzugt ist nämlich ein erfindungsgemäßes Verfahren, wobei der textile Festigkeitsträger zumindest teilweise eingefärbt ist und/oder zumindest einen Kennfaden umfasst, bevorzugt zumindest einen Kennfaden umfasst. In dieser Ausgestaltung kommen die Vorteile des erfindungsgemäßen Verfahrens besonders ausgeprägt zur Geltung.

Bevorzugt ist zudem ein erfindungsgemäßes Verfahren, wobei der textile Festigkeitsträger ein Material umfasst, welches ausgewählt ist aus der Gruppe bestehend aus Polyestern, Polyamiden, Polyurethanen, Glas, Kohlenstoff, Cellulosen, Polycarbonaten, Polyketonen und Kombinationen dieser Materialien, bevorzugt ausgewählt ist aus der Gruppe bestehend aus Polyestern, regenerierter Cellulose, insbesondere Rayon, Aramiden, Nylon und Kombinationen dieser Materialien, besonders bevorzugt ausgewählt ist aus der Gruppe bestehend aus Nylon, wobei der textile Festigkeitsträger ganz besonders bevorzugt aus diesen Materialien besteht. Geeignete Polyester umfassen beispielsweise Polyethylenterephthalat (PET), Polyethylennaphthalat (PEN), Polybutylenterephthalat (PBT), Polyethylenfuranoat (PEF) und Polyesterpolyacrylate, die beispielsweise von der Celanese AG unter dem Handelsnamen Vectran angeboten werden. Beispiele für Polyamide sind Nylon-4,6 (PA 4.6), Nylon-4, 10 (PA 4.10), Nylon-6 (PA 6), Nylon-6,6 (PA 6.6 Polyhexamethylenadipamid), Nylon-6, 12 (PA 6.12), Nylon-10,10 (PA 10.10) und Nylon-12,12 (PA 12.12). Geeignete Polyamide sind beispielsweise aromatische Polyamide wie Aramide, insbesondere m-Aramid, p-Aramid und Mischungen aus m-Aramid und p-Aramid. Geeignete Cellulosen sind beispielsweise regenerierte Cellulosen (insbesondere Viskose oder Rayon) und Celluloseester.

Bevorzugt ist auch ein erfindungsgemäßes Verfahren, wobei der textile Festigkeitsträger einen oder mehrere Verstärkungskorde umfasst, bevorzugt in der Form eines Gewebes, welche jeweils zumindest ein Garn umfassen. Beispielsweise kann das textile Verstärkungsmaterial in Form von ein- oder mehrfädigen Textilkorden oder in Form von flächigen Fadengebilden wie Bändchen auf Basis von ein- oder mehrfädigen Garnen vorliegen.

Bevorzugt ist vor diesem Hintergrund ein erfindungsgemäßes Verfahren, wobei der textile Festigkeitsträger einen oder mehrere Verstärkungskorde umfasst, bevorzugt in der Form eines Gewebes, welche jeweils zumindest zwei unterschiedliche Garne umfassen, wobei die Garne jeweils bevorzugt aus einem Material bestehen, welches ausgewählt ist aus der Gruppe bestehend aus Polyestern, Polyamiden, Polyurethanen, Glas, Kohlenstoff, Cellulosen, Polycarbonaten und Polyketonen.

Bevorzugt ist grundsätzlich ein erfindungsgemäßes Verfahren, wobei zumindest eines der Garne, bevorzugt sämtliche Garne, in den Verstärkungskorden eine Feinheit im Bereich von 90 bis 5000 dtex, bevorzugt im Bereich von 100 bis 2500 dtex oder im Bereich von 2500 bis 4500 dtex, besonders bevorzugt im Bereich von 200 bis 1500 dtex oder im Bereich von 3000 bis 4000 dtex, aufweist.

Bevorzugt ist ein grundsätzlich auch erfindungsgemäßes Verfahren, wobei zumindest eines der Garne, bevorzugt sämtliche Garne, in den Verstärkungskorden mit 100 bis 600 T/m, bevorzugt mit 150 bis 550 T/m, besonders bevorzugt mit 200 bis 500 T/m, verdreht ist.

Bevorzugt ist grundsätzlich zudem ein erfindungsgemäßes Verfahren, wobei das Polyamidgarn einen Twistfaktor im Bereich von 100 bis 400, bevorzugt im Bereich von 150 bis 350, aufweist. Der Twistfaktor $\alpha$ ist eine dem Fachmann bekannte Größe und berechnet sich aus dem Twistlevel in T/m ("turns per meter") und der Feinheit in tex:

$$\alpha = T/m \ \sqrt{\tfrac{tex}{1000}}$$

Bevorzugt ist grundsätzlich ebenfalls ein erfindungsgemäßes Verfahren, wobei zumindest einer der Verstärkungskorde, bevorzugt sämtliche Verstärkungskorde, zwei oder mehr Garne umfasst, wobei die Garne im Verstärkungskord bevorzugt mit 100 bis 600 T/m, besonders bevorzugt mit 150 bis 550 T/m, ganz besonders bevorzugt mit 200 bis 500 T/m, miteinander endverdreht sind.

Bevorzugt ist grundsätzlich auch ein erfindungsgemäßes Verfahren, wobei zumindest einer der Verstärkungskorde, bevorzugt sämtliche Verstärkungskorde, eine Gesamtfeinheit im Bereich von 180 bis 10000 dtex, bevorzugt im Bereich von 200 bis 7500 dtex, besonders bevorzugt im Bereich von 400 bis 5000 dtex, aufweist.

Für den Fachmann versteht es sich, dass in dem erfindungsgemäßen Verfahren auch mehrere Festigkeitsträger verarbeitet und in ein entsprechendes vulkanisierbares Verbundmaterial eingearbeitet werden können. Für die überwiegende Anzahl an Fällen ist eine entsprechende Verfahrensführung sogar bevorzugt. Bevorzugt ist entsprechend ein erfindungsgemäßes Verfahren, wobei das Verfahren für zwei oder mehrere textile Festigkeitsträger durchgeführt wird.

Die Herstellung von vulkanisierbaren Gummierungsmischungen, die nach der Vulkanisation in lichtdurchlässigen, insbesondere transparenten, vulkanisierten Gummierungsmischungen resultieren, ist dem Fachmann prinzipiell aus dem Stand der Technik bekannt, beispielsweise aus der DE 8234954 U1, der US 6624220 B1 und der US 2004/0044118 A1, so dass sich der Fachmann bei der Herstellung am Stand der Technik orientieren kann.

Wie vorstehend beschrieben ist es möglich, lediglich Teile der Gummierung lichtdurchlässig auszubilden, bspw. indem die vernetzbare Gummierungsmischung aus mehreren Teilgummierungsmischungen besteht. Auch wenn dies gerade in Bezug auf die optische Wirkung bevorzugt sein kann, sind bedingt durch die einfachere Fertigung doch in den meisten Fällen solche Gummierungen bevorzugt, die im Wesentlichen in ihrer Gesamtheit lichtdurchlässig ausgebildet sind. Bevorzugt ist somit ein erfindungsgemäßes Verfahren, wobei die vernetzbare Gummierungsmischung zwei oder mehr separate Teilgummierungsmischungen umfasst, wobei zumindest eine Teilgummierungsmischung durch Vulkanisation zu einer vernetzten Teilgummierungsmischung verarbeitet werden kann, die für sichtbares Licht zumindest teilweise durchlässig ist. Bevorzugt ist alternativ ein erfindungsgemäßes Verfahren, wobei die vernetzbare Gummierungsmischung durch Vulkanisation zu einer vernetzten Gummierungsmischung verarbeitet werden kann, die im Wesentlichen in ihrer Gesamtheit für sichtbares Licht zumindest teilweise durchlässig ist.

Mit Blick auf die relevanten Wellenlängenbereiche, in denen die Gummierung lichtdurchlässig sein sollte, lässt sich ein geeigneter Bereich definieren, wobei es besonders bevorzugt ist, wenn die Gummierung im Wesentlichen nicht diffus streut, so dass diese transparent ist. Bevorzugt ist somit ein erfindungsgemäßes Verfahren, wobei die vernetzbare Gummierungsmischung durch Vulkanisation zu einer vernetzten Gummierungsmischung verarbeitet werden kann, die zumindest abschnittweise, bevorzugt im Wesentlichen in ihrer Gesamtheit, für sichtbares Licht mit einer Wellenlänge im Bereich von 380 bis 780 nm zumindest teilweise durchlässig ist. Bevorzugt ist ebenfalls ein erfindungsgemäßes Verfahren, wobei die vernetzbare Gummierungsmischung durch Vulkanisation zu einer vernetzten Gummierungsmischung verarbeitet werden kann, die zumindest abschnittweise, bevorzugt im Wesentlichen in ihrer Gesamtheit, für sichtbares Licht zumindest teilweise transparent ist.

Die Erfinder der vorliegenden Erfindung konnten für die vernetzbare Gummierungsmischung besonders geeignete Zusammensetzungen identifizieren.

Bevorzugt ist nämlich ein erfindungsgemäßes Verfahren, wobei die vernetzbare Gummierungsmischung wenigstens einen Dienkautschuk umfasst, wobei der Dienkautschuk bevorzugt ausgewählt ist aus der Gruppe bestehend aus halogenierten Copolymeren eines C4 bis C7 Isoolefins und eines Alkylstyrols, natürlichem Polyisopren (NR), synthetischem Polyisopren (IR), Butadienkautschuk (BR), Styrol-ButadienKautschuk (SBR), Styrol-Isopren-Kautschuk, Butylkautschuk, Nitrilkautschuk (NBR), Chloropren-Kautschuk, Isopren-ButadienKautschuk und Ethylen-Propylen-Kautschuk, wobei der Dienkautschuk besonders bevorzugt ausgewählt ist aus der Gruppe bestehend aus bromierten Copolymeren aus Isobutylen und para-Metyhlstyrol, natürlichem Polyisopren, synthetischem Polyisopren und cis-1,4-Butadienkautschuk. Beispielsweise kann das Polyisopren (IR, NR) entweder cis-1,4-Polyisopren oder 3,4-Polyisopren sein. Bevorzugt werden jedoch cis-1,4-Polyisoprene mit einem cis-1,4-Gehalt > 90 Gew.-% verwendet. Beispielsweise ist es möglich, ein solches Polyisopren durch stereospezifische Polymerisation in Lösung mit Ziegler-Natta-Katalysatoren oder unter Verwendung feinteiliger Lithiumalkyle zu erhalten. Zudem ist Naturkautschuk (NR) ein solches cis-1,4-Polyisopren; der cis-1,4-Gehalt im Naturkautschuk ist größer als 99 Gew.-%.

Das Polybutadien (BR) kann beispielsweise cis-1,4-Polybutadien oder Vinylpolybutadien sein (Vinylgehalt etwa 10 bis 90 Gew.-%). Bevorzugt wird cis-1,4-Polybutadien mit einem cis-1,4-Gehalt größer 90 Gew.-% eingesetzt, das beispielsweise durch Lösungspolymerisation in Gegenwart von Katalysatoren vom Typ der Seltenen Erden hergestellt werden kann.

Bei den Styrol-Butadien-Copolymeren (SBR) kann es sich beispielsweise um lösungspolymerisierte Styrol-Butadien-Copolymere (S-SBR) mit einem Styrolgehalt bezogen auf das Polymer von etwa 10 bis 45 Gew.-% und einem Vinylgehalt (d.h. Gehalt von 1, 2-gebundenem Butadien, bezogen auf das Gesamtpolymer) von 10 bis 70 Gew.-% handeln, das beispielsweise unter Verwendung von Lithiumalkylen in organischen Lösungsmitteln hergestellt werden kann. Der S-SBR kann auch gekoppelt und endgruppenmodifiziert sein. Alternativ können emulsionspolymerisierte Styrol-Butadien-Copolymere (E-SBR) und Mischungen aus E-SBR und S-SBR eingesetzt werden. Der Styrolgehalt des E-SBR beträgt etwa 15 bis 50 Gew.-%, wobei beispielsweise die aus dem Stand der Technik bekannten Produkte eingesetzt werden können, die durch Copolymerisation von Styrol und 1,3-Butadien in wässriger Emulsion erhalten wurden.

Beispielsweise kann das halogenierte Copolymer eines C4 bis C7 Isoolefins und eines Alkylstyrols aus einem Isobutylen und einem Methylstyrol bestehen, wobei die Styroleinheit ortho-, meta- oder paraalkyliert sein kann. Das Copolymer kann mit einem beliebigen Halogen halogeniert sein. Vorzugsweise wird ein bromiertes Copolymer aus Isobutylen und para-Methylstyrol eingesetzt. Die in der Mischung eingesetzten Dienkautschuke, insbesondere Styrol-Butadien-Copolymere, können auch teil- oder vollfunktionalisiert eingesetzt werden. Die Funktionalisierung kann mit Gruppen erfolgen, die mit den eingesetzten Füllstoffen wechselwirken können, insbesondere mit OH-Gruppen tragenden Füllstoffen. Funktionalisierungen können beispielsweise solche mit Hydroxylgruppen und/oder Epoxygruppen und/oder Siloxangruppen und/oder Aminogruppen und/oder Phthalocyaningruppen und/oder Carboxylgruppen und/oder Silansulfidgruppen sein.

Bevorzugt ist insoweit ein erfindungsgemäßes Verfahren, wobei die vernetzbare Gummierungsmischung 25 bis 100 phr, bevorzugt 50 bis100 phr, besonders bevorzugt 70 bis 100 phr des wenigstens einen Dienkautschuks umfasst.

Bevorzugt ist zudem ein erfindungsgemäßes Verfahren, wobei die vernetzbare Gummierungsmischung 15 bis 50 phr eines bromierten Copolymers aus Isobutylen und para-Metyhlstyrol und/oder 25 bis 85 phr an natürlichem und/oder synthetischem Polyisopren und/oder 15 bis 50 phr an cis-1,4-Butadienkautschuk umfasst.

Bevorzugt ist auch ein erfindungsgemäßes Verfahren, wobei die vernetzbare Gummierungsmischung 10 bis 90 phr, bevorzugt 15 bis 40 phr, eines Füllstoffs umfasst, bevorzugt amorphes Siliciumdioxid, insbesondere gefällte Kieselsäure, wobei die vernetzbare Gummierungsmischung ganz besonders bevorzugt einen polaren Füllstoff, insbesondere amorphes Siliciumdioxid, und eine oder mehrere Silan-Verbindungen zum Anbinden der polaren Füllstoffe umfasst. Der Füllstoff kann dabei ein beliebiges geeignetes Material sein, das im Stand der Technik zur Verwendung als Füllstoff bekannt ist oder eine Mischung dieser Materialien. Die Gummierungsmischung umfasst vorzugsweise Kieselsäure als Füllstoff, wobei dies in der Fachwelt amorphes Siliciumdioxid bezeichnet. Es kann sich um die für Reifenkautschukmischungen üblichen Kieselsäuren handeln. Besonders bevorzugt ist es, wenn eine fein verteilte, gefällte Kieselsäure verwendet wird, die eine CTAB-Oberfläche (gemäß ASTM D 3765) von 30 bis 350 $m^2/g$, vorzugsweise von 120 bis 250 $m^2/g$, aufweist. Als Kieselsäuren können beispielsweise sowohl konventionelle Kieselsäure wie die des Typs VN3 (Handelsname) der Firma Evonik als auch hoch dispergierbare Kieselsäuren, so genannte HD-Kieselsäuren (z. B. Ultrasil 7000 der Firma Evonik), zum Einsatz kommen.

Für manche Anwendungen bevorzugt ist ein erfindungsgemäßes Verfahren, wobei die vernetzbare Gummierungsmischung zusätzlich 0,1 bis 10 phr, an weiteren Füllstoffen umfasst, wobei die weiteren Füllstoffe ausgewählt sind aus der Gruppe bestehend aus Alumosilikaten, Kreide, Stärke, Magnesiumoxid, Titandioxid, Kautschukgele und Kombinationen dieser Füllstoffe. Alternativ bevorzugt ist ein erfindungsgemäßes Verfahren, wobei die vernetzbare Gummierungsmischung weniger als 0,005 phr bevorzugt weniger als 0,001 phr der weiteren Füllstoffe umfasst.

Zum Erhalt von füllstoffhaltigen, lichtdurchlässigen Gummierungen ist es regelmäßig zielführend, den Gehalt an schwarzen Pigmenten und anderen Farbmitteln möglichst gering zu halten. Bevorzugt ist daher ein erfindungsgemäßes Verfahren, wobei die vernetzbare Gummierungsmischung weniger als 1 phr, bevorzugt weniger als 0,1 phr, besonders bevorzugt weniger als 0,01 phr an schwarzen Farbmitteln, insbesondere schwarzen Pigmenten, insbesondere Ruß, Graphen oder Kohlenstoffnanoröhren, als Füllstoff umfasst.

Die Vulkanisation der vernetzbaren Gummierungsmischung wird regelmäßig in Anwesenheit von Schwefel und/oder Schwefelspendern durchgeführt, wobei einige Schwefelspender zugleich als Vulkanisationsbeschleuniger wirken können. Schwefel oder Schwefelspender werden im letzten Mischungsschritt in den vom Fachmann gebräuchlichen Mengen (0,4 bis 8 phr, Schwefel bevorzugt in Mengen von 0,4 bis 4 phr) der Gummierungsmischung zugesetzt. Die Vulkanisation kann auch in Anwesenheit von sehr geringen Schwefelmengen in Kombination mit schwefelspendenden Substanzen erfolgen. Des Weiteren kann die Gummierungsmischung vulkanisationsbeeinflussende Substanzen wie Vulkanisationsbeschleuniger, Vulkanisationsverzögerer und Vulkanisationsaktivatoren in üblichen Mengen enthalten, um die erforderliche Zeit und/oder die erforderliche Temperatur der Vulkanisation zu kontrollieren und die Vulkanisationseigenschaften zu verbessern. Die Vulkanisationsbeschleuniger können dabei zum Beispiel ausgewählt sein aus folgenden Beschleunigergruppen: Thiazolbeschleuniger wie z. B. 2-Mercaptobenzothiazol, Sulfenamidbeschleuniger wie z. B. Benzothiazyl-2-cyclohexylsulfenamid (CBS), Guanidinbeschleuniger wie z. B. N,N'-Diphenylguanidin (DPG), Dithiocarbamatbeschleuniger wie z. B. Zinkdibenzyldithiocarbamat, Disulfide, Thiophosphate. Die Beschleuniger können auch in Kombination miteinander eingesetzt werden, wobei sich synergistische Effekte ergeben können. Bevorzugt ist vor diesem Hintergrund ein erfindungsgemäßes Verfahren, wobei die vernetzbare Gummierungsmischung 0,4 bis 8,0 phr, bevorzugt 0,4 bis 4 phr, besonders bevorzugt 0,5 bis 2,5 phr, Schwefel umfasst, wobei die vernetzbare Gummierungsmischung bevorzugt ein oder mehrere weitere Vulkanisationsadditive umfasst, die ausgewählt sind aus der Gruppe bestehend aus Vulkanisationsbeschleuniger, Vulkanisationsverzögerer und Vulkanisationsaktivatoren.

Bevorzugt ist zudem ein erfindungsgemäßes Verfahren, wobei die vernetzbare Gummierungsmischung ein oder mehrere Additive umfasst, die ausgewählt sind aus der Gruppe bestehend aus Kupplungsagenzien, insbesondere Silan-Kupplungsagenzien, Weichmachern, Alterungsschutzmitteln, Aktivatoren, Wachsen, Klebharzen, Mastifikationshilfsmitteln und Verarbeitungshilfsmitteln. Als Weichmacher kommen dabei alle dem Fachmann bekannten Weichmacher in Frage, beispielsweise aromatische, naphthenische oder paraffinische Mineralölweichmacher, wie z. B. MES (mild extraction solvate) oder TDAE (treated distillate aromatic extract), oder Rubber-to-Liquid-Öle (RTL) oder Gas-to-Liquid-Öle (GTL) oder Biomass-to-Liquid-Öle (BTL; wie sie in der DE 10 2008 037 714 A1 offenbart sind) oder Öle auf Basis nachwachsender Rohstoffe, wie z. B. Rapsöl, Terpenöle (z. B. Orangenöle) oder Faktisse oder Weichmacherharze oder Flüssig-Polymere (wie Flüssig-BR), deren mittleres Molekulargewicht (Bestimmung per GPC = gel permeation chromatography, in Anlehnung an BS ISO 11344:2004 ) zwischen 500 und 20000 g/mol liegt. Werden in der Gummierungsmischung Flüssig-Polymere als Weichmacher eingesetzt, so gehen diese nicht als Kautschuk in die Berechnung der Zusammensetzung der Polymermatrix (phr-Berechnung) ein. Bei der Verwendung von Mineralöl sind Weißöle besonders bevorzugt. Alterungsschutzmittel sind beispielsweise Substanzen wie N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD) und 2,2,4-Trimethyl-1,2-dihydrochinolin (TMQ). Als Aktivatoren kommen beispielsweise Zinkoxid, Zinkcarbonat und Fettsäuren (z. B. Stearinsäure) zum Einsatz. Ein Beispiel für ein Mastikationshilfsmittel ist z. B. 2,2'-Dibenzamidodiphenyldisulfid (DBD). Zu den Verarbeitungshilfsmitteln zählen etwa Fettsäuresalze, wie z. B. Zinkseifen, und Fettsäureester und deren Derivate, wie z. B. PEG-Carbonsäureester.

Besonders ansprechende optische Effekte lassen sich erzeugen, wenn die vernetzbare Gummierungsmischung farbig lichtdurchlässig, insbesondere farbig transparent, ausgebildet wird, d.h. im sichtbaren Spektrum des Lichts ein ungleichmäßiges Absorptionsverhalten zeigt, was durch Farbstoffe erreicht werden kann. Bevorzugt ist deshalb ein erfindungsgemäßes Verfahren, wobei die vernetzbare Gummierungsmischung einen oder mehrere Farbstoffe umfasst.

Als wässrige Dispersion für die Haftaktivierung sind insbesondere solche Systeme geeignet, die beispielsweise in der WO 2019/015792 A1 sowie der EP 3702521 A1, der EP 3702522 A1 und der EP 3702523 A1 offenbart sind.

Grundsätzlich bevorzugt ist insoweit ein erfindungsgemäßes Verfahren, wobei die wässrige Dispersion umfasst:

(w1) wenigstens einen Kautschuklatex, unter der Vorgabe, dass dieser Kautschuklatex kein Polyisoprenkautschuk-Latex (incl. synthetischem und natürlichem Polyisoprenkautschuk-Latex) ist, und

(w2) wenigstens ein geschütztes Isocyanat, und

(w3) wenigstens einen Füllstoff und/oder wenigstens ein Polymer mit Carbonsäure-funktionellen Gruppen und/oder wenigstens einen Polyisoprenkautschuk (incl. synthetischen und natürlichem Polyisoprenkautschuk-Latex) und/oder wenigstens ein Wachs.

Als Kautschuklatex kommt beispielsweise VP-Latex in Betracht. VP-Latex ist dem Fachmann bekannt. "VP" steht für "Vinyl-Pyridin", wobei bekannte VP-Latizes auch zusätzliche Monomere umfassen können. Ein bevorzugtes Beispiel für einen VP-Latex ist ein Vinyl-Pyridin-Latex, welcher typischerweise 15 % Vinyl-Pyridin, 15 % Styrol und 70 % Butadien Monomere umfasst. Neben dem VP-Latex kann die wässrige Dispersion einen oder mehrere zusätzliche Latizes umfassen, wie etwa ein Styrol-Butadien-Latex (SBR) und Naturlatex (NR).
Für den Isoprenkautschuk ist die Verwendung von Naturlatex mit hohem Ammoniakgehalt bevorzugt, der vom "Hevea Brasiliensis" Baum stammt.
Geeignete Polyisocyanat-Verbindungen als Bestandteil von Bädern/Dips für textile Festigkeitsträger sind dem Fachmann prinzipiell bekannt. Die Polyisocyanat-Verbindung kann dabei mit einer anderen Verbindung geblockt oder als Dimer oder höheres Homolog, also "mit sich selbst geblockt" (engl. "self-blocked") vorliegen. Geblockte Polyisocyanate werden beispielsweise und bevorzugt dadurch erhalten, dass freie Isocyanate mit wenigstens einer Substanz geblockt werden, welche ausgewählt ist aus der Gruppe bestehend aus Phenol, Thiophenol, Chlorphenol, Cresol, Resorcin, p-sec-Butylphenol, p-tert-Butylphenol, p-sec-Amylphenol, p-Octylphenol, p-Nonylphenol, tert-Butylalkohol, Diphenylamin, Dimethylanilin, Phthalimid, δ-Valerolactam, ε-Caprolactam, Malonsäuredialkylester, Acetylaceton, Acetessigsäurealkylester, Acetoxim, Methylethylketoxim, 3,5-Dimethylpyrazol, Cyclohexanonoxim, 3-Hydroxypyridin und saurem Natriumsulfit. Bevorzugt ist es im Rahmen der vorliegenden Erfindung, dass die Polyisocyanat-Verbindung Bausteine umfasst, die ausgewählt sind aus der Gruppe bestehend aus Tetramethylendiisocyanat, Hexamethylendiisocyanat, Diphenylmethan-4,4'- Diisocyanat, Octamethylendiisocyanat, Decamethylendiisocyanat, Dodecamethylendiisocyanat, aromatische Diisocyanate umfassend 2,4- oder 2,6- Toluoldiisocyanat, Tetramethylxyloldiisocyanat, p-Xyloldiisocyanat, 2,4'- oder 4,4'- Diisocyanatdiphenylmethan, 1,3- oder 1,4-Phenyldiisocyanat.
Die Polycarbonsäure basiert beispielsweise zu 10 bis 100 mol-%, bevorzugt zu 30 bis 100 mol.-%, besonders bevorzugt zu 50 bis 100 mol.-%, ganz besonders bevorzugt zu 70 bis 100 mol.-%, insbesondere bevorzugt zu 90 bis 100 mol.-% auf Carbonsäuregruppenhaltigen Monomeren. Gemäß einer besonders vorteilhaften Ausführungsform der Erfindung basiert die Polycarbonsäure zu 100 mol-% auf Carbonsäuregruppenhaltigen Monomeren, wobei weitere funktionelle Gruppen nicht ausgeschlossen werden. Bevorzugt weist die Polycarbonsäure ein Gewichtsmittel des Molekulargewichtes Mw gemäß GPC von 1.000 bis 500.000 g/mol, bevorzugt von 3.000 bis 100.000 g/mol auf. Bevorzugt basiert die Polycarbonsäure auf Acrylsäure-, Methacrylsäure-, Itaconsäure-, Crotonsäure-, Zimtsäure- und/oder Maleinsäure-Monomeren. Gemäß einer bevorzugten Ausführungsform handelt es sich bei der Polycarbonsäure (auf Basis von Acrylsäure-Monomeren) um ein Acrylharz.

Geeignete Epoxy-Verbindungen als Bestandteil entsprechender wässriger Dispersionen sind dem Fachmann grundsätzlich bekannt. Bevorzugt ist es im Rahmen der vorliegenden Erfindung, dass die Epoxy-Verbindung ausgewählt ist aus der Gruppe bestehend aus Glycidyl-basiertem Glycerol, Sorbitol basierten Epoxy-Verbindungen, Phenol-basierten Novolak Epoxy-Verbindungen und Cresol-basierten Novolak Epoxy-Verbindungen. Besonders geeignet als Epoxy-Verbindung ist beispielsweise ein Glycerol-basierter Polyglycidylether, wie z. B. Denacol™ EX-313, welcher u. a. in der DE 69722388 T2 beschrieben ist.

Mögliche Wachse als Bestandteil entsprechender wässriger Dispersionen sind dem Fachmann grundsätzlich bekannt. Bevorzugte Beispiele sind paraffinische Wachse, mikrokristalline Wachse, synthetische Wachse und Wachse aus natürlichen Quellen wie z.B. Bienenwachs, wobei auch Kombinationen von zwei oder mehreren Wachsen umfasst sind.

Als Füllstoffe für die wässrige Dispersion besonders geeignet sind wasserdispergierbare anorganische Füllstoffe. Besonders bevorzugt sind amorphes Siliciumdioxid (insbesondere gefällte Kieselsäure) und Silikate mit einer BET-Oberfläche (gemäß ISO 9277:2010) von 30 bis 450 m$^2$/g, vorzugsweise von 120 bis 410 m$^2$/g.

Die wässrige Dispersion hat bevorzugt einen pH-Wert von 5 bis 11, bevorzugt von 7 bis 11, der zweckmäßiger Weise mit einer Base eingestellt werden kann. Die Base ist bevorzugt eine flüchtige Base, die oder deren Bestandteile während des Verfahrens verdampfen. Gemäß einer besonders vorteilhaften Ausführungsform der Erfindung ist die Base Ammoniumhydroxid, also eine wässrige Lösung von Ammoniak.

Bevorzugt ist im Lichte der vorstehenden Ausführungen ein erfindungsgemäßes Verfahren, wobei die wässrige Dispersion umfasst:

(x1) wenigstens einen Kautschuklatex, bevorzugt in einem auf das Trockengewicht der wässrigen Dispersion bezogenem Massenanteil von 4 bis 60 %, und

(x2) wenigstens ein geschütztes Isocyanat, bevorzugt in einem auf das Trockengewicht der wässrigen Dispersion bezogenem Massenanteil von 0,1 bis 10 %.

Bevorzugt ist zudem ein erfindungsgemäßes Verfahren, wobei die wässrige Dispersion umfasst:

(y1) wenigstens eine Verbindung, die eine Epoxy-Gruppe enthält, bevorzugt in einem auf das Trockengewicht der wässrigen Dispersion bezogenem Massenanteil von bis zu 6 %, und/oder

(y2) wenigstens ein Polymer mit Carbonsäure-funktionellen Gruppen, bevorzugt in einem auf das Trockengewicht der wässrigen Dispersion bezogenem Massenanteil von bis zu 15 %.

Besonders bevorzugt ist ein erfindungsgemäßes Verfahren, wobei die wässrige Dispersion eine der folgenden Komponenten umfasst:

(z1) wenigstens einen Füllstoff, bevorzugt in einem auf das Trockengewicht der wässrigen Dispersion bezogenem Massenanteil von 0,02 bis 20 %, bevorzugt mit der Maßgabe, dass die wässrige Dispersion kein Polymer mit Carbonsäure-funktionellen Gruppen umfasst, oder

(z2) wenigstens einen Polyisoprenkautschuk-Latex, bevorzugt in einem auf das Trockengewicht der wässrigen Dispersion bezogenem Massenanteil von 1 bis 20 %, bevorzugt mit der Maßgabe, dass die wässrige Dispersion wenigstens einen Kautschuklatex umfasst, welcher kein Polyisoprenkautschuk-Latex ist, oder

(z3) wenigstens ein Wachs, bevorzugt in einem auf das Trockengewicht der wässrigen Dispersion bezogenem Massenanteil von 0,3 bis 30 %.

Unter den möglichen wässrigen Dispersionen für die Haftaktivierung sind nach Einschätzung der Erfinder drei spezifische Ausführungsformen besonders geeignet.

Bevorzugt ist nämlich zum einen ein erfindungsgemäßes Verfahren, wobei die wässrige Dispersion umfasst:

(h1) wenigstens einen Kautschuklatex, in einem auf das Trockengewicht der wässrigen Dispersion bezogenem Massenanteil von 4 bis 50 %, bevorzugt von 4,5 bis 25 %,

(h2) wenigstens ein geschütztes Isocyanat, in einem auf das Trockengewicht der wässrigen Dispersion bezogenem Massenanteil von 0,1 bis 4,5 %, bevorzugt von 0,2 bis 4 %,

(h3) wenigstens einen Füllstoff, in einem auf das Trockengewicht der wässrigen Dispersion bezogenem Massenanteil von 0,02 bis 20 %, bevorzugt von 0,3 bis 15 %.

Bevorzugt ist alternativ ein erfindungsgemäßes Verfahren, wobei die wässrige Dispersion umfasst:

(i1) wenigstens einen Kautschuklatex, in einem auf das Trockengewicht der wässrigen Dispersion bezogenem Massenanteil von 4 bis 50 %, bevorzugt von 4,5 bis 25 %,

(i2) wenigstens ein geschütztes Isocyanat, in einem auf das Trockengewicht der wässrigen Dispersion bezogenem Massenanteil von 0,1 bis 10 %, bevorzugt 0,2 bis 4,5 %,

(i3) wenigstens ein Wachs, in einem auf das Trockengewicht der wässrigen Dispersion bezogenem Massenanteil von 0,3 bis 30 %, bevorzugt von 0,5 bis 15 %.

Bevorzugt ist wiederum alternativ ein erfindungsgemäßes Verfahren, wobei die wässrige Dispersion umfasst:

(j1) wenigstens einen Kautschuklatex, in einem auf das Trockengewicht der wässrigen Dispersion bezogenem Massenanteil von 4 bis 40 %, bevorzugt 4,5 bis 20 %, wobei der Kautschuklatex kein Polyisoprenkautschuk-Latex ist,

(j2) wenigstens ein geschütztes Isocyanat, in einem auf das Trockengewicht der wässrigen Dispersion bezogenem Massenanteil von 0,1 bis 10 %, bevorzugt 0,2 bis 4,5 %,

(j3) wenigstens einen Polyisoprenkautschuk-Latex, bevorzugt in einem auf das Trockengewicht der wässrigen Dispersion bezogenem Massenanteil von 1 bis 20 %, bevorzugt 2 bis 15 %.

Unter Ausnutzung der vorteilhafterweise fehlenden Eigenfärbung der wässrigen Dispersion kann die erzeugte Haftaktivierung besonders leicht eingefärbt werden. Bevorzugt ist deshalb ein erfindungsgemäßes Verfahren, wobei die wässrige Dispersion ein oder mehrere Pigmente und/oder Farbstoffe umfasst.

Auch wenn ein anderes Auftragsverfahren möglich ist, wird die wässrige Dispersion bevorzugt als Dip appliziert, was wegen der vorteilhaften geringen Eigenfärbung trotz des Einsatzes als Scheuerschutz und trotz der lichtdurchlässigen Gummierung ohne optische Einbußen möglich ist . Bevorzugt ist daher ein erfindungsgemäßes Verfahren, wobei das Behandeln in Schritt b) ein Eintauchen des textilen Festigkeitsträgers in die wässrige Dispersion umfasst, wobei das Behandeln bevorzugt zudem die Heißverstreckung der getauchten textilen Festigkeitsträger umfasst.

Die mit dem erfindungsgemäßen Verfahren hergestellten vulkanisierbaren Verbundmaterialien können in Fahrzeugreifenrohlingen verbaut werden, bspw. in Rohlingen für Fahrradreifen. Bevorzugt ist folglich auch ein erfindungsgemäßes Verfahren, zusätzlich umfassend den Schritt:

d) Herstellen eines unvulkanisierten Fahrzeugreifenrohlings, insbesondere eines unvulkanisierten Fahrradreifenrohlings, umfassend das vulkanisierbare Verbundmaterial.

Aus den vorstehend gefertigten unvulkanisierten Fahrzeugreifenrohlingen, bzw. in weniger bevorzugten Fällen auch lediglich aus den unvulkanisierten Verbundmaterialien, können durch Vulkanisation die vorteilhaften vulkanisierten Verbundmaterialien bzw. die diese vulkanisierten Verbundmaterialien umfassenden Fahrzeugreifen hergestellt werden. Die Erfindung betrifft daher auch ein Verfahren zur Herstellung eines Fahrzeugreifens, insbesondere eines Fahrradreifens, oder eines vulkanisierten Verbundmaterials, umfassend die Schritte des erfindungsgemäßen Verfahrens zur Herstellung eines vulkanisierbaren Verbundmaterials, sowie zusätzlich zumindest einen der Schritte:

e) Vulkanisieren des vulkanisierbaren Verbundmaterials zum Erhalt eines vulkanisierten Verbundmaterials, und/oder

f) Vulkanisieren des unvulkanisierten Fahrzeugreifenrohlings zum Erhalt eines Fahrzeugreifens,

wobei das Vulkanisieren so erfolgt, dass der haftaktivierte textile Festigkeitsträger zumindest abschnittweise an der Oberfläche des vulkanisierten Verbundmaterials und/oder des Fahrzeugreifens liegt, wobei das Vulkanisieren bevorzugt so erfolgt, dass der haftaktivierte textile Festigkeitsträger teilweise von der vernetzten Gummierungsmischung umgeben ist.

Bevorzugt ist insoweit ein erfindungsgemäßes Verfahren, wobei der Fahrzeugreifen ein Fahrradreifen ist, wobei die Breite des Reifenmantels quer zur Umlaufrichtung bevorzugt im Bereich von 20 bis 70 mm, bevorzugt im Bereich von 25 bis 65 mm liegt und/oder wobei der Innendurchmesser des Reifenmantels bevorzugt im Bereich von 340 bis 640 mm, bevorzugt im Bereich von 550 bis 630 mm liegt.

Ganz besonders bevorzugt ist ein erfindungsgemäßes Verfahren, wobei der Fahrzeugreifen das vulkanisierte Verbundmaterial als Teil der Seitenwand umfasst, bevorzugt als Scheuerschutz.

Im Lichte der vorstehenden Ausführungen ist es für den Fachmann ersichtlich, dass die Erfindung auch das mit dem erfindungsgemäßen Verfahren hergestellte vulkanisierbare Verbundmaterial, das daraus herstellbare vulkanisierte Verbundmaterial und die entsprechenden Fahrzeugreifen betrifft, wobei sich jeweils die vorstehend diskutierten Vorteile ergeben.

Gemäß Anspruch 7 betrifft die Erfindung somit auch ein vulkanisierbares Verbundmaterial für die Herstellung von Fahrzeugreifen, bevorzugt hergestellt oder herstellbar mit dem erfindungsgemäßen Verfahren zur Herstellung eines vulkanisierbaren Verbundmaterials, umfassend:

i) zumindest einen textilen Festigkeitsträger, welcher zumindest abschnittweise, bevorzugt im Wesentlichen vollständig, mit einer wässrigen Dispersion haftaktiviert ist, und
ii) ein Grundmaterial umfassend eine vernetzbare Gummierungsmischung,

wobei der textile Festigkeitsträger auf der Oberfläche des Grundmaterials angeordnet ist, wobei der textile Festigkeitsträger bevorzugt teilweise von der vernetzbaren Gummierungsmischung umgeben ist, wobei die wässrige Dispersion im Wesentlichen frei ist von freiem Resorcin sowie Resorcin-Vorkondensaten, insbesondere Resorcin-Formaldehyd-Vorkondensaten, und frei ist von freiem Formaldehyd sowie Formaldehyd freisetzenden Substanzen, wobei die vernetzbare Gummierungsmischung durch Vulkanisation zu einer vernetzten Gummierungsmischung verarbeitet werden kann, die zumindest abschnittweise für sichtbares Licht zumindest teilweise durchlässig ist.

Da es sich bei der mittels der wässrigen Dispersion erzeugten Haftaktivierung um eine komplexe Beschichtung handelt, deren Struktur inhärent nicht präzise beschrieben werden kann, ist es notwendig, die im erfindungsgemäßen vulkanisierbaren Verbundmaterial eingesetzten textilen Festigkeitsträger über die erfahrene Haftaktivierung zu definieren.

Die Erfindung betrifft folglich ebenfalls ein vulkanisiertes Verbundmaterial nach Anspruch 8, insbesondere für den Einsatz als Scheuerschutz in Fahrzeugreifen hergestellt oder herstellbar durch Vulkanisation des erfindungsgemäßen vulkanisierbaren Verbundmaterials, bevorzugt mit dem erfindungsgemäßen Verfahren zur Herstellung eines vulkanisierten Verbundmaterials, umfassend eine vernetzte Gummierungsmischung, die für sichtbares Licht zumindest teilweise durchlässig ist, wobei der haftaktivierte textile Festigkeitsträger zumindest abschnittweise an der Oberfläche des vulkanisierten Verbundmaterials liegt, wobei der haftaktivierte textile Festigkeitsträger bevorzugt teilweise von der vernetzten Gummierungsmischung umgeben ist.

Gemäß Anspruch 9 betrifft die Erfindung ebenfalls einen Fahrzeugreifen, insbesondere einen Fahrradreifen, umfassend ein erfindungsgemäßes vulkanisiertes Verbundmaterial, bevorzugt hergestellt oder herstellbar mit dem erfindungsgemäßen Verfahren zur Herstellung eines Fahrzeugreifens. Bevorzugt ist insoweit ein Fahrzeugreifen, welcher das vulkanisierte Verbundmaterial im Bereich der Seitenwand umfasst, bevorzugt als äußerste Lage, insbesondere als Scheuerschutz.

Bevorzugt ist zudem ein Fahrzeugreifen, zusätzlich umfassend im Bereich des vulkanisierten Verbundmaterials eine oder mehrere aufvulkanisierte Gummietiketten und/oder einen Aufdruck, bevorzugt eine oder mehrere aufvulkanisierte Gummietiketten.

Nachfolgend wird eine beispielhafte Ausgestaltung des erfindungsgemäßen Verfahrens vorgeschlagen, bei der es sich nach Einschätzung der Erfinder um eine besonders vorteilhafte Ausgestaltung handelt. Zudem wird ein mit diesem beispielhaften Verfahren hergestellter erfindungsgemäßer Fahrradreifen vorgeschlagen, der ein erfindungsgemäßes vulkanisiertes Verbundmaterial als Scheuerschutz umfasst und bei dem es sich nach Einschätzung der Erfinder ebenfalls um eine besonders günstige Ausführungsform eines erfindungsgemäßen Fahrzeugreifens handelt, bei dem die Vorteile der vorliegenden Erfindung besonders stark zum Tragen kommen.

Im Rahmen des beispielhaften Verfahrens wird ein textiler Festigkeitsträger bereitgestellt, bei dem es sich um ein Gewebe aus mehreren Verstärkungskorden handelt, wobei die Verstärkungskorde jeweils ein Aramidgarn mit einer Feinheit von 420 dtex und ein Nylongarn mit einer Feinheit von 470 dtex umfassen, die mit 320 T/m miteinander endverdreht sind. Das eingesetzte Aramidgarn ist dabei gelblich gefärbt, wohingegen das Nylongarn über eine herstellerspezifische Kennfandenmarkierung verfügt.

Der textile Festigkeitsträger wird durch ein Tauchverfahren mit einer wässrigen Dispersion haftaktiviert und mittels Heißverstreckung bearbeitet. Die wässrige Dispersion enthält weder freies Resorcin oder Resorcin-Vorkondensaten noch freies Formaldehyd oder Formaldehyd freisetzenden Substanzen. Als wässrige Dispersion wird dabei eine Zusammensetzung eingesetzt, die Vinyl-Pyridin-Latex in einem auf das Trockengewicht der wässrigen Dispersion bezogenem Massenanteil von 20 %, geblocktes Hexamethylendiisocyanat in einem auf das Trockengewicht der wässrigen Dispersion bezogenem Massenanteil von 5 % und Polyisoprenkautschuk-Latex in einem auf das Trockengewicht der wässrigen Dispersion bezogenem Massenanteil von 10 % umfasst. Zudem umfasst die wässrige Dispersion bevorzugt auch eine auf Acrylsäure basierende Polycarbonsäure und als Epoxid-Verbindung Glycerolbasierten Polyglycidylether.

Anschließend wird der haftaktivierte Festigkeitsträger auf der Oberfläche eines lagenförmigen Grundmaterials angeordnet, das eine vernetzbare Gummierungsmischung umfasst. Die vernetzbare Gummierungsmischung umfasst dabei 25 phr eines bromierten Copolymers aus Isobutylen und para-Metyhlstyrol und 55 phr an natürlichem Polyisopren und 20 phr an cis-1,4-Butadienkautschuk. Die vernetzbare Gummierungsmischung umfasst zudem 30 phr an amorphem Siliciumdioxid als Füllstoff und ist frei von schwarzen Farbmitteln, insbesondere schwarzen Pigmenten wie Ruß oder Graphen. Als Teil eines üblichen Vulkanisationssystems umfasst die vernetzbare Gummierungsmischung zudem 2,4 phr Schwefel sowie darüber hinaus übliche weitere Bestandteile wie Silan-Kupplungsagenzien und Klebharze, wobei diese so ausgewählt werden, dass sie die Transparenz der vernetzten Gummierungsmischung nicht beeinträchtigen. Diese vernetzbare Gummierungsmischung resultiert nach der Vulkanisation in einer vernetzten Gummierungsmischung, die in ihrer Gesamtheit für sichtbares Licht mit Wellenlängen im Bereich von 380 bis 780 nm derart durchlässig ist, dass die in der transparenten vernetzten Gummierungsmischung eingebetteten textilen Festigkeitsträger auch in den von der Gummierung überlagerten Bereichen von außen mit bloßem Auge gut zu erkennen sind.

Das wie vorstehend beschrieben hergestellte vulkanisierbare Verbundmaterial wird als Bestandteil der Seitenwand mit anderen Komponenten zu einem unvulkanisierten Fahrradreifenrohling zusammengefügt, wobei das vulkanisierbare Verbundmaterial im Seitenbereich des Fahrradreifenrohlings so angeordnet ist, dass die textilen Festigkeitsträger außen auf der Oberfläche liegen.

Auf die an der Oberfläche liegenden textilen Festigkeitsträger wird ein wässriges Beschichtungsmaterial aufgetragen, welches einen keramischen Hartstoff mit einem Massenanteil von etwa 7 % und ein Polyisopren-basiertes Bindemittel umfasst.

Aus dem unvulkanisierten Fahrradreifenrohling wird anschließend durch Vulkanisation bei üblichen Bedingungen ein Fahrradreifen erhalten, welcher im Bereich der Seitenwand das vulkanisierte Verbundmaterial umfasst, welches die äußerste Schicht des Fahrradreifens bildet, so dass der textile Festigkeitsträger außen auf der Oberfläche liegt. Beim Vulkanisieren wird dabei die vernetzbare Gummierungsmischung von unten gegen den textilen Festigkeitsträger gepresst, so dieser im vulkanisierten Fahrradreifen teilweise von der vernetzten Gummierungsmischung umgeben ist.

## Patentansprüche

1.  Verfahren zur Herstellung eines vulkanisierbaren Verbundmaterials, umfassend die Schritte:

    a) Herstellen oder Bereitstellen eines textilen Festigkeitsträgers,
    b) Behandeln des textilen Festigkeitsträgers mit einer wässrigen Dispersion zur Haftaktivierung des textilen Festigkeitsträgers und zum Erhalt eines haftaktivierten textilen Festigkeitsträgers, und
    c) Anordnen des haftaktivierten textilen Festigkeitsträgers auf der Oberfläche eines Grundmaterials umfassend eine vernetzbare Gummierungsmischung zum Erhalt des vulkanisierbaren Verbundmaterials,
    wobei die wässrige Dispersion

    - im Wesentlichen frei ist von freiem Resorcin sowie Resorcin-Vorkondensaten, insbesondere Resorcin-Formaldehyd-Vorkondensaten, und frei ist von freiem Formaldehyd sowie Formaldehyd freisetzenden Substanzen, sowie
    - (x1) wenigstens einen Kautschuklatex, und
    - (x2) wenigstens ein geschütztes Isocyanat in einem auf das Trockengewicht der wässrigen Dispersion bezogenem Massenanteil von 0,1 bis 10 % umfasst, und

    wobei die vernetzbare Gummierungsmischung durch Vulkanisation zu einer vernetzten Gummierungsmischung verarbeitet werden kann, die zumindest abschnittsweise für sichtbares Licht zumindest teilweise durchlässig ist.

2.  Verfahren nach Anspruch 1, wobei die wässrige Dispersion den wenigstens einen Kautschuklatex in einem auf das Trockengewicht der wässrigen Dispersion bezogenem Massenanteil von 4 bis 60 % umfasst.

3.  Verfahren nach einem der Ansprüche 1 oder 2, wobei die wässrige Dispersion umfasst:

    (y1) wenigstens eine Verbindung, die eine Epoxy-Gruppe enthält, bevorzugt in einem auf das Trockengewicht der wässrigen Dispersion bezogenem Massenanteil von bis zu 6 %, und/oder
    (y2) wenigstens ein Polymer mit Carbonsäurefunktionellen Gruppen, bevorzugt in einem auf das Trockengewicht der wässrigen Dispersion bezogenem Massenanteil von bis zu 15 %.

4.  Verfahren nach einem der Ansprüche 1 bis 3, wobei die wässrige Dispersion eine der folgenden Komponenten umfasst:

    (z1) wenigstens einen Füllstoff, bevorzugt in einem auf das Trockengewicht der wässrigen Dispersion bezogenem Massenanteil von 0,02 bis 20 %, bevorzugt mit der Maßgabe, dass die wässrige Dispersion kein Polymer mit Carbonsäure-funktionellen Gruppen umfasst, oder
    (z2) wenigstens einen Polyisoprenkautschuk-Latex, bevorzugt in einem auf das Trockengewicht der wässrigen Dispersion bezogenem Massenanteil von 1 bis 20 %, bevorzugt mit der Maßgabe, dass die wässrige Dispersion wenigstens einen Kautschuklatex umfasst, welcher kein Polyisoprenkautschuk-Latex ist, oder
    (z3) wenigstens ein Wachs, bevorzugt in einem auf das Trockengewicht der wässrigen Dispersion bezogenem Massenanteil von 0,3 bis 30 %.

**5.** Verfahren nach einem der Ansprüche 1 bis 4, zusätzlich umfassend den Schritt:
d) Herstellen eines unvulkanisierten Fahrzeugreifenrohlings, umfassend das vulkanisierbare Verbundmaterial.

**6.** Verfahren zur Herstellung eines Fahrzeugreifens oder eines vulkanisierten Verbundmaterials, umfassend die Schritte des Verfahrens nach einem der Ansprüche 1 bis 5, sowie zusätzlich zumindest einen der Schritte:

e) Vulkanisieren des vulkanisierbaren Verbundmaterials zum Erhalt eines vulkanisierten Verbundmaterials, und/oder
f) Vulkanisieren des unvulkanisierten Fahrzeugreifenrohlings zum Erhalt eines Fahrzeugreifens,
wobei das Vulkanisieren so erfolgt, dass der haftaktivierte textile Festigkeitsträger zumindest abschnittweise an der Oberfläche des vulkanisierten Verbundmaterials und/oder des Fahrzeugreifens liegt, wobei das Vulkanisieren bevorzugt so erfolgt, dass der haftaktivierte textile Festigkeitsträger teilweise von der vernetzten Gummierungsmischung umgeben ist.

**7.** Vulkanisierbares Verbundmaterial für die Herstellung von Fahrzeugreifen, umfassend:

i) zumindest einen textilen Festigkeitsträger, welcher zumindest abschnittweise, bevorzugt im Wesentlichen vollständig, mit einer wässrigen Dispersion haftaktiviert ist, und
ii) ein Grundmaterial umfassend eine vernetzbare Gummierungsmischung,
wobei der textile Festigkeitsträger auf der Oberfläche des Grundmaterials angeordnet ist, wobei der textile Festigkeitsträger bevorzugt teilweise von der vernetzbaren Gummierungsmischung umgeben ist,
wobei die wässrige Dispersion

- im Wesentlichen frei ist von freiem Resorcin sowie Resorcin-Vorkondensaten, insbesondere Resorcin-Formaldehyd-Vorkondensaten, und frei ist von freiem Formaldehyd sowie Formaldehyd freisetzenden Substanzen, sowie
- (x1) wenigstens einen Kautschuklatex, und
- (x2) wenigstens ein geschütztes Isocyanat in einem auf das Trockengewicht der wässrigen Dispersion bezogenem Massenanteil von 0,1 bis 10 % umfasst, und

wobei die vernetzbare Gummierungsmischung durch Vulkanisation zu einer vernetzten Gummierungsmischung verarbeitet werden kann, die zumindest abschnittweise für sichtbares Licht zumindest teilweise durchlässig ist.

**8.** Vulkanisiertes Verbundmaterial, insbesondere für den Einsatz als Scheuerschutz in Fahrzeugreifen, hergestellt oder herstellbar durch Vulkanisation des vulkanisierbaren Verbundmaterials nach Anspruch 7, umfassend eine vernetzte Gummierungsmischung, die für sichtbares Licht zumindest teilweise durchlässig ist, wobei der haftaktivierte textile Festigkeitsträger zumindest abschnittweise an der Oberfläche des vulkanisierten Verbundmaterials liegt, wobei der haftaktivierte textile Festigkeitsträger bevorzugt teilweise von der vernetzten Gummierungsmischung umgeben ist.

**9.** Fahrzeugreifen, umfassend ein vulkanisiertes Verbundmaterial nach Anspruch 8.

**Claims**

**1.** Process for producing a vulcanizable composite material, comprising the steps of:

a) producing or providing a textile strength member,
b) treating the textile strength member with an aqueous dispersion for adhesive activation of the textile strength member and to obtain an adhesion-activated textile strength member, and
c) arranging the adhesion-activated textile strength member on the surface of a base material comprising a crosslinkable rubberization mixture to obtain the vulcanizable composite material,
wherein the aqueous dispersion

- is essentially free of free resorcinol and resorcinol precondensates, especially resorcinol-formaldehyde precondensates, and is free of free formaldehyde and formaldehyde-releasing substances, and comprises
- (x1) at least one rubber latex, and
- (x2) at least one protected isocyanate in a proportion by mass based on the dry weight of the aqueous dispersion of 0.1% to 10%, and

wherein the crosslinkable rubberization mixture is processible by vulcanization to give a crosslinked rubberization mixture which is at least partly transmissive to visible light at least in sections.

**2.** Process according to Claim 1, wherein the aqueous dispersion comprises the at least one rubber latex in a proportion by mass based on the dry weight of the aqueous dispersion of 4% to 60%.

**3.** Process according to either of Claims 1 and 2, wherein the aqueous dispersion comprises:

(y1) at least one compound containing an epoxy group, preferably in a proportion by mass based on the dry weight of the aqueous dispersion of up to 6%, and/or
(y2) at least one polymer having carboxylic acid-functional groups, preferably in a proportion by mass based on the dry weight of the aqueous dispersion of up to 15%.

**4.** Process according to any of Claims 1 to 3, wherein the aqueous dispersion comprises one of the following components:

(z1) at least one filler, preferably in a proportion by mass based on the dry weight of the aqueous dispersion of 0.02% to 20%, preferably with the proviso that the aqueous dispersion does not include any polymer having carboxylic acid-functional groups, or
(z2) at least one polyisoprene rubber latex, preferably in a proportion by mass based on the dry weight of the aqueous dispersion of 1% to 20%, preferably with the proviso that the aqueous dispersion includes at least one rubber latex which is not a polyisoprene rubber latex, or
(z3) at least one wax, preferably in a proportion by mass based on the dry weight of the aqueous dispersion of 0.3% to 30%.

**5.** Process according to any of Claims 1 to 4, additionally comprising the step of:
d) producing an unvulcanized vehicle tire blank comprising the vulcanizable composite material.

**6.** Process for producing a vehicle tire or a vulcanized composite material, comprising the steps of the process according to any of Claims 1 to 5, and additionally at least one of the steps of:

e) vulcanizing the vulcanizable composite material to obtain a vulcanized composite material, and/or
f) vulcanizing the unvulcanized vehicle tire blank to obtain a vehicle tire, wherein the vulcanizing is effected such that the adhesion-activated textile strength member, at least in sections, lies at the surface of the vulcanized composite material and/or of the vehicle tire, wherein the vulcanizing is preferably effected such that the adhesion-activated textile strength member is partly surrounded by the crosslinked rubberization mixture.

**7.** Vulcanizable composite material for the production of vehicle tires, comprising:

i) at least one textile strength member that has been adhesion-activated at least in sections, preferably essentially entirely, with an aqueous dispersion, and
ii) a base material comprising a crosslinkable rubberization mixture,
wherein the textile strength member is disposed on the surface of the base material, wherein the textile strength member is preferably partly surrounded by the crosslinkable rubberization mixture,
wherein the aqueous dispersion

- is essentially free of free resorcinol and resorcinol precondensates, especially resorcinol-formaldehyde precondensates, and is free of free formaldehyde and formaldehyde-releasing substances, and comprises
- (x1) at least one rubber latex, and
- (x2) at least one protected isocyanate in a proportion by mass based on the dry weight of the aqueous dispersion of 0.1% to 10%, and

wherein the crosslinkable rubberization mixture is processible by vulcanization to give a crosslinked rubberization mixture which is at least partly transmissive to visible light at least in sections.

**8.** Vulcanized composite material, especially for use as an abrasion guard in vehicle tires, produced or producible by vulcanization of the vulcanizable composite material according to Claim 7, comprising a crosslinked rubberization mixture which is at least partly transmissive to visible light, wherein the adhesion-activated textile strength member, at least in sections, lies at the surface of the vulcanized composite material, wherein the adhesion-activated textile strength member is preferably partly surrounded by the crosslinked rubberization mixture.

**9.** Vehicle tire comprising a vulcanized composite material according to Claim 8.

**Revendications**

**1.** Procédé de fabrication d'un matériau composite vulcanisable, comprenant les étapes suivantes :

a) production ou mise à disposition d'un support de renfort textile,

b) traitement du support de renfort textile avec une dispersion aqueuse pour activer l'adhérence du support de renfort textile et obtenir un support de renfort textile à adhérence activée, et

c) mise en place du support de renfort textile à adhérence activée sur la surface d'un matériau de base comprenant un mélange de gommage réticulable pour obtenir le matériau composite vulcanisable,

la dispersion aqueuse

- étant sensiblement exempte de résorcine libre et de précondensats de résorcine, en particulier de précondensats de résorcine-formaldéhyde, et exempte de formaldéhyde libre et de substances libérant du formaldéhyde, et comprenant
- (x1) au moins un latex de caoutchouc, et
- (x2) au moins un isocyanate protégé dans une proportion massique de 0,1 à 10 % par rapport au poids sec de la dispersion aqueuse, et

le mélange de gommage réticulable pouvant être traité par vulcanisation pour obtenir un mélange de gommage réticulé qui, au moins par sections, est au moins partiellement transparent à la lumière visible.

**2.** Procédé selon la revendication 1, dans lequel la dispersion aqueuse comprend l'au moins un latex de caoutchouc dans une proportion massique de 4 à 60 % par rapport au poids sec de la dispersion aqueuse.

**3.** Procédé selon l'une des revendications 1 ou 2, la dispersion aqueuse comprenant :

(y1) au moins un composé contenant un groupe époxy, de préférence dans une proportion massique allant jusqu'à 6 % par rapport au poids sec de la dispersion aqueuse, et/ou

(y2) au moins un polymère ayant des groupes fonctionnels acide carboxylique, de préférence dans une proportion massique allant jusqu'à 15 % par rapport au poids sec de la dispersion aqueuse.

**4.** Procédé selon l'une des revendications 1 à 3, la dispersion aqueuse comprenant l'un des constituants suivants :

(z1) au moins une charge, de préférence dans une proportion massique de 0,02 à 20 % par rapport au poids sec de la dispersion aqueuse, de préférence sous réserve que la dispersion aqueuse ne comprenne pas de polymère ayant des groupes fonctionnels acide carboxylique, ou

(z2) au moins un latex de caoutchouc polyisoprène, de préférence dans une proportion massique de 1 à 20 % par rapport au poids sec de la dispersion aqueuse, de préférence sous réserve que la dispersion aqueuse comprenne au moins un latex de caoutchouc qui n'est pas un latex de caoutchouc polyisoprène, ou

(z3) au moins une cire, de préférence dans une proportion massique de 0,3 à 30 % par rapport au poids sec de la dispersion aqueuse.

**5.** Procédé selon l'une des revendications 1 à 4, comprenant l'étape suivante :
d) fabrication d'une ébauche de pneumatique de véhicule non vulcanisée, comprenant le matériau composite vulcanisable.

**6.** Procédé de fabrication d'un pneumatique de véhicule ou d'un matériau composite vulcanisé, comprenant les étapes du procédé selon l'une des revendications 1 à 5 ainsi qu'au moins l'une des étapes suivantes :

e) vulcanisation du matériau composite vulcanisable pour obtenir un matériau composite vulcanisé, et/ou

f) vulcanisation de l'ébauche de pneumatique de véhicule pour obtenir un pneumatique de véhicule,

la vulcanisation étant réalisée de manière à ce que le support de renfort textile à adhérence activée soit situé au moins par sections à la surface du matériau composite vulcanisé et/ou du pneumatique de véhicule, la vulcanisation étant de préférence réalisée de manière à ce que le support de renfort textile à adhérence activée soit partiellement entouré par le mélange de gommage réticulé.

**7.** Matériau composite pour la fabrication de pneumatiques de véhicule, comprenant :

i) au moins un support de renfort textile, dont l'adhérence est activée au moins par sections, de préférence sensiblement entièrement, au moyen d'une dispersion aqueuse, et

ii) un matériau de base comprenant un mélange de gommage réticulable,

le support de renfort textile étant disposé sur la surface du matériau de base, le support de renfort textile étant de préférence partiellement entouré par le mélange de gommage réticulable,

la dispersion aqueuse

- étant sensiblement exempte de résorcine libre et de précondensats de résorcine, en particulier de précondensats de résorcine-formaldéhyde, et exempte de formaldéhyde libre et de substances libérant du formaldéhyde, et comprenant
- (x1) au moins un latex de caoutchouc, et
- (x2) au moins un isocyanate protégé dans une proportion massique de 0,1 à 10 % par rapport au poids sec de la dispersion aqueuse, et

le mélange de gommage réticulable pouvant être traité par vulcanisation pour obtenir un mélange de gommage réticulé qui, au moins par sections, est au moins partiellement transparent à la lumière visible.

8. Matériau composite vulcanisé, en particulier pour une utilisation comme protection contre l'abrasion dans les pneumatiques de véhicule, fabriqué ou pouvant être fabriqué par vulcanisation du matériau composite vulcanisable selon la revendication 7, comprenant un mélange de gommage réticulé qui est au moins partiellement transparent à la lumière visible, le support de renfort textile à adhérence activée étant situé au moins par sections à la surface du matériau composite vulcanisé, le support de renfort textile à adhérence activée étant de préférence partiellement entouré par le mélange de gommage réticulé.

9. Pneumatique de véhicule comprenant un matériau composite vulcanisé selon la revendication 8.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP S60139876 A
- DE 8234954 U1
- US 6624220 B1
- US 20040044118 A1
- DE 102008037714 A1
- WO 2019015792 A1
- EP 3702521 A1
- EP 3702522 A1
- EP 3702523 A1
- DE 69722388 T2